# EUROPÄISCHE PATENTSCHRIFT

(11) **EP 1 184 614 B1**
(45) Veröffentlichungstag und Bekanntmachung des Hinweises auf die Patenterteilung: **25.05.2005**
(21) Anmeldenummer: 01117504.9
(22) Anmeldetag: 20.07.2001
(51) Int. Cl.: F16L 59/02

(54) **Rohrschale**
Pipe shell
Demi-coquille

(30) Priorität: 29.08.2000 DE 10042254
(43) Veröffentlichungstag der Anmeldung: 06.03.2002
(73) Patentinhaber: Deutsche Rockwool Mineralwoll GmbH & Co. OHG, 45966 Gladbeck (DE)
(72) Erfinder: Nowoczin, Andreas, 46284 Dorsten (DE)
(74) Vertreter: Wanischeck-Bergmann, Axel, Dipl.-Ing.

(56) Entgegenhaltungen:
- EP-A- 1 031 782
- AT-B- 319 453
- DE-A- 2 309 866
- DE-U- 29 518 110
- DE-U- 29 520 476
- FR-A- 2 556 447

## Beschreibung

Die Erfindung betrifft eine Rohrschale zur Wärme- und Schalldämmung einer Rohrleitung, mit zumindest einem einen Hohlraum umgebenden Dämmelement, das eine Aussenfläche und eine Innenfläche aufweist, wobei die dem Hohlraum zugewandte Innenfläche zur Anlage mit einer Aussenmantelfläche der Rohrleitung bringbar ist.

Derartige Rohrschalen sind aus dem Stand der Technik bekannt. Beispielsweise offenbart die DE 295 18 110 U1 eine wärmeisolierende Körper-Ummantelung, insbesondere für Warmwasserbehälter oder dergleichen, beispielsweise Rohren von größerem Durchmesser, die einen zylindrischen oder beliebigen anderen Querschnitt (Sechskant, Achtkant, Rechteck, Quadrat, etc.) besitzen, wobei die Ummantelung mit einer Spannbandage an dem Körper festlegbar ist. Diese wärmeisolierende Körper-Ummantelung besteht aus mehreren Mantelsegmenten, die als Formkörper ausgebildet sind und demzufolge eine Kontur entsprechend der Außengestaltung des zu isolierenden Rohres haben. Derartige Formkörper sind sowohl mehrteilig, als auch einteilig bekannt. Eine weitere Rohrleitungsisolierung ist aus der US 3 336 951 bekannt. Diese Isolierung besteht aus einer Dämmstoffplatte, die im Bereich einer großen Oberfläche v-förmige Einkerbungen aufweist, die parallel zueinander und in gleichmäßigem Abstand zueinander verlaufend angeordnet sind. Eine derart vorbereitete Dämmstoffplatte kann in einfacher Weise um eine Rohrleitung gelegt werden. Es bedarf jedoch zusätzlicher Befestigungsmittel, um eine derartige Dämmstoffplatte an der Rohrleitung zu befestigen.

Die DE 295 20 476 U1 betrifft eine Isolierung für ein Sanitär- oder Heizungsrohr, mit einem Isolationsschalenkörper, welcher ein erstes Halbschalenteil und zweites Halbschalenteil aufweist, wobei die beiden Halbschalenteile klappbar miteinander verbunden und mit Verriegelungsmitteln zum Zusammenhalten der beiden Halbschalenteile im zusammengeklappten Zustand des Isolationsschalenkörpers versehen sind. Eine Umfangsfläche beider in den Halbschalen ausgebildeten Halbhohlräume weist längs verlaufende Rippenvorsprünge auf, die an der Außenfläche des zu isolierenden Rohres anliegen.

Die beiden Halbschalenteile sind über ein Filmschamier einstückig miteinander verbunden. Sie sind als Endlosprofil hergestellt. Beide Aussagen führen dazu, dass die hier dargestellte Isolierung aus einem Kunststoff, beispielsweise einem gummi- oder thermoplastischen Schaummaterial besteht.

Es ist zu erkennen, dass die Innenfläche des Isolationsschalenkörpers einen Hohlraum ausbildet, der im Querschnitt rund und parallel zur Außenmantelfläche der Rohrleitung ausgebildet ist.

Weiterhin offenbart die DE-OS 2 309 806 eine Rohrschale zur Wärme- und/oder Schalldämmung einer Rohrleitung, gemäß dem Oberbegriff des Anspruchs 1, welche zumindest ein einen Hohlraum umgebendes Dämmelement aufweist, das eine Außenfläche und eine Innenfläche hat, wobei die dem Hohlraum zugewandte Innenfläche zur Anlage mit einer Außenmantelfläche der Rohrleitung bringbar ist, wobei die Innenfläche und die Außenfläche des Dämmelementes antiparallel zueinander ausgerichtet sind. Die Außenfläche weist einen Verlauf auf, der zu einem im Querschnitt kreisrunden Dämmelement führt, während die Innenfläche einen Hohlraum begrenzt, der im Querschnitt im Wesentlichen dreieckig ausgebildet ist. Diese Ausgestaltung soll den Vorteil haben, dass eine derartige Rohrschale an Rohrleitungen unterschiedlicher Außendurchmesser anpassbar ist. Jedoch liegen Teile der Innenfläche des Dämmelementes nicht an der Außenmantelfläche der Rohrleitung an und bilden somit Unstetigkeitsstellen der Wärme- und/oder Schalldämmung der Rohrleitung.

Ferner ist aus der DE 25 08 733 A1 ein wärme- und schalldämmender Mantel für Lüftungs- und Klimaanlagen bekannt. Dieser Mantel kann entsprechend der Form der zu isolierenden Lüftungs- und Klimaanlage ausgebildet werden, wobei auch hier Einkerbungen vorgesehen sind, um das Biegen der einzelnen Dämmstoffplatte zu ermöglichen.

Schließlich offenbart die AT- PS 319 453 eine Isolierung für einen Schacht, der ein Innenrohr und einen Außenmantel aufweist, wobei die Isolierung zwischen dem Innenrohr und dem Außenmantel angeordnet ist. Die Isolierung besteht ebenfalls aus einzelnen Dämmstoffplatten, die Einkerbungen aufweisen, um eine Anpassung der Isolierung an die Radien des Innrohres bzw. des Außenmantels vornehmen zu können.

Es ist daher festzustellen, dass für die Wärme- und Schallisolierung von Rohrleitungen aus dem Stand der Technik im Wesentlichen zwei unterschiedliche Vorgehensweisen bekannt sind. Zum einen werden Rohrleitungen durch einteilige oder mehrteilige Rohrschalen isoliert, die als Formstücke ausgebildet sind. Andererseits ist es bekannt, Rohrleitungen mit biegbaren Dämmstoffplatten zu isolieren, wobei hier eine zusätzliche Befestigung der Dämmstoffplatten, beispielsweise in Form einer Umwicklung notwendig ist.

Bei sämtlichen Rohrschalen des Standes der Technik und dies gilt auch hinsichtlich der Wärme- und Schalldämmung durch biegbare Dämmplatten weisen die Dämmmaterialien eine über ihre Länge gleichbleibende Materialstärke auf. Hierbei kann es nachteilig sein, dass bei der Montage derartiger Dämmmaterialien an den zu isolierenden Rohrleitungen ein vollständiges Anliegen des Dämmmaterials an der Rohrteitung nicht gegeben ist. Es entstehen daher zwischen der Rohrleitung und dem Dämmmaterial Lufteinschlüsse, die sich sowohl hinsichtlich der Wärme- als auch der Schalldämmung negativ auswirken.

Ausgehend von diesem Stand der Technik liegt der Erfindung die **Aufgabe** zugrunde, eine Rohrschale derart weiter zu entwickeln, dass die voranstehend genannten Nachteile vermieden werden.

Die **Lösung** dieser Aufgabenstellung sieht vor, dass der durch die Innenfläche des Dämmelementes gebildete Hohlraum einen ovalen oder einen elliptischen Querschnitt aufweist.

Vorzugsweise weist hierbei das Dämmelement eine kreisbogenförmig ausgebildete Außenfläche auf, die in der Regel der Außenmantelfläche der Rohrleitung entspricht. Als Material zur Herstellung einer derartigen Rohrschale hat sich insbesondere Glas- oder Steinwolle als geeignet erwiesen. Selbstverständlich können derartige Rohrschalen auch aus anderen Dämmmaterialien, insbesondere solchen aus kompressiblen Fasermaterialien bestehen.

Der von dem Dämmelement umfasste, einen ovalen oder elliptischen Querschnitt aufweisende Hohlraum ist insbesondere für Rohrleitungen mit kreisrundem Querschnitt geeignet. Durch die Ausgestaltung dieser Querschnittsformen der Rohrschale wird bei der Montage der Rohrschale an der Rohrleitung eine Kraft erforderlich, mit der der Querschnitt des Hohlraums an den Querschnitt der Rohrleitung angepasst wird. Hierdurch wird der elliptische oder ovale Querschnitt aufgrund der Flexibilität des Dämmelementes an den Querschnitt der Rohrleitung angepasst, wodurch eine vollständige Anlage des Dämmelementes an der Rohrschale erzielt wird. Lufteinschlüsse können auf diese Art und Weise verhindert werden. Trotz der von der Außenmantelfläche der Rohrleitung abweichenden Querschnittsform des Hohlraumes ist die für die Anpassung der Innenfläche des Dämmelementes an die Außenmantelfläche der Rohrleitung relativ gering im Vergleich zu einer Verwendung von herkömmlichen Rohrelementen, die einen im Vergleich zum Durchmesser der Rohrleitung verringerten Durchmesser aufweisen. Hierbei wird als Nachteil immer wieder beobachtet, dass bei dieser Vorgehensweise die Rohrschale aufbricht.

Die voranstehend beschriebene Rohrschale kann sowohl einteilig als Formstück oder mehrteilig aus mehreren Formstücken ausgebildet sein.

Weitere Merkmale und Vorteile der Erfindung ergeben sich aus der nachfolgenden Beschreibung der zugehörigen Zeichnung, in der bevorzugte Ausführungsformen der Erfindung dargestellt sind. In der Zeichnung zeigen:
- Figur 1: eine erste Ausführungsform einer Rohrschale im Querschnitt und
- Figur 2: eine zweite Ausführungsform einer Rohrschale im Querschnitt.

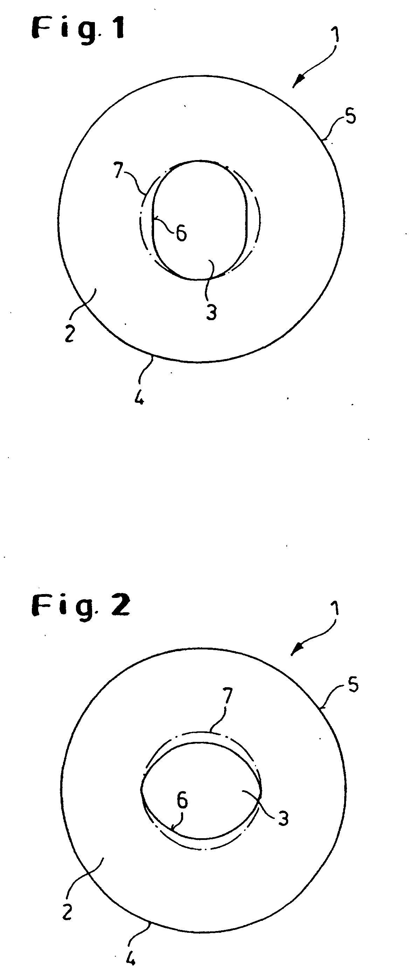

Eine in Figuren 1 und 2 dargestellte Rohrschale 1 dient der Wärme- und/oder Schalldämmung einer nicht näher dargestellten Rohrleitung und weist einen Mantel 2 auf, der einen Hohlraum 3 umgibt. Der Mantel 2 besteht aus einem Dämmelement 4, welches ein- oder mehrteilig als Formstück ausgebildet ist. Das Dämmelement 4 besteht aus Steinwolle, d. h. aus Mineralfasern, die durch Aufschmelzen und Zerfasern eines natürlichen oder künstlichen Gesteins gewonnen werden.

Das Dämmelement 4 hat eine Außenfläche 5 und eine Innenfläche 6. Die Außenfläche 5 ist hierbei derart ausgebildet, dass das Dämmelement im Querschnitt kreisförmig ausgebildet ist. Demgegenüber hat der Hohlraum gemäß der Ausführungsform der Figur 1 einen ovalen Querschnitt, wohingegen bei der Ausführungsform gemäß Figur 2 der Hohlraum einen elliptischen Querschnitt aufweist.

Bei beiden Ausführungsformen der Figuren 1 und 2 wird der Querschnitt des Hohlraums 3 bei der Montage der Rohrschale 1 an einer nicht näher dargestellten Rohrleitung mit kreisrundem Querschnitt in einen ebenfalls kreisrunden Querschnitt verformt. In den Figuren 1 und 2 ist der Querschnitt des Hohlraums nach der Montage durch eine strichpunktierte Linie 7 dargestellt.

Die in den Figuren 1 und 2 dargestellten Rohrschalen 1 haben bei gleichem Außendurchmesser unterschiedliche mittels der Rohrleitung wegzudrückende Querschnittsflächen. Diese wegzudrückende Querschnittsfläche liegt bei einer Rohrschale 1 gemäß Figur 1 mit einem Außendurchmesser von 68 mm, einer Breite des ovalen Hohlraums von 22 mm und einer Länge des ovalen Hohlraums mit einem Radius von 11 mm bei 103,5 mm².

Bei der in Figur 2 dargestellten Rohrschale 1 mit gleichem Außendurchmesser hat der elliptische Hohlraum eine Länge von 27,5 mm und eine Breite von 22 mm. Der Ellipsenradius beträgt 14 mm und die Abweichung von der Mittelachse 3 mm, so dass sich eine wegzudrückende Querschnittsfläche von 177 mm² ergibt.

## Patentansprüche

1. Rohrschale zur Wärme- und/oder Schalldämmung einer Rohrleitung, mit zumindest einem einen Hohlraum (3) umgebenden Dämmelement (4), das eine Außenfläche (5) und eine Innenfläche (6) aufweist, wobei die dem Hohlraum zugewandte Innenfläche (6) zur Anlage mit einer Außenmantelfläche der Rohrleitung bringbar ist, wobei die Innenfläche (6) und die Außenfläche (5) des Dämmelementes (4) antiparallel zueinander ausgerichtet sind,
**dadurch gekennzeichnet,**
**dass** der durch die Innenfläche (6) des Dämmelementes (4) gebildete Hohlraum (3) einen ovalen oder einen elliptischen Querschnitt aufweist.

2. Rohrschale nach Anspruch 1,
**dadurch gekennzeichnet,**
**dass** das Dämmelement (4) eine kreisbogenförmig ausgebildete Außenfläche (5) aufweist.

3. Rohrschale nach Anspruch 1,
**dadurch gekennzeichnet,**
**dass** das Dämmelement (4) mehrteilig ausgebildet ist.

4. Rohrschale nach Anspruch 1,
**dadurch gekennzeichnet,**
**dass** das Dämmelement (4) aus Mineralfasem, insbesondere Steinwolle besteht.

## Claims

1. Pipe shell for heat and/or sound insulation of a conduit, said pipe shell comprising at least one insulation element (4) surrounding a hollow space (3), which insulation element has an outer surface (5) and an inner surface (6), wherein said inner surface (6) facing said hollow space can be brought into contact with an outer surface area of said conduit, wherein said inner surface (6) and said outer surface (5) of the insulation element (4) are arranged anti-parallel with respect to each other,
**characterized in**
**that** said hollow space (3) which is defined by the inner surface (6) of the insulation element (4) has an oval or an elliptical cross section.

2. Pipe shell according to claim 1,
**characterized in**
**that** said insulation element (4) has a circular arc-shaped outer surface (5).

3. Pipe shell according to claim 1,
**characterized in**
**that** said insulation element (4) is configured in a multipart fashion.

4. Pipe shell according to claim 1,
**characterized in**
**that** said insulation element (4) consists of mineral fibers, particularly of rock wool.

## Revendications

1. Coffrage de tuyau pour l'isolation thermique et/ou acoustique d'une tuyauterie avec au moins un élément isolant (4) qui entoure un espace creux (3), élément isolant qui présente une surface extérieure (5) et une surface intérieure (6), la surface intérieure (6) tournée vers l'espace creux pouvant être mise en appui avec la surface d'enveloppe extérieure de la tuyauterie, la surface intérieure (6) et la surface extérieure (5) de l'élément isolant (4) étant orientées de manière antiparallèle l'une par rapport à l'autre,
**caractérisé en ce**
**que** l'espace creux (3) qui est formé par la surface intérieure (6) de l'élément isolant (4) présente une section ovale ou une section elliptique.

2. Coffrage de tuyau selon la revendication 1,
**caractérisé en ce**
**que** l'élément isolant (4) présente une surface extérieure (5) configurée en forme d'arc de cercle.

3. Coffrage de tuyau selon la revendication 1,
**caractérisé en ce**
**que** l'élément isolant (4) est configuré en plusieurs parties.

4. Coffrage de tuyau selon la revendication 1,
**caractérisé en ce**
**que** l'élément isolant (4) est constitué par des fibres minérales, en particulier de la laine minérale.
